# EUROPÄISCHE PATENTANMELDUNG

(11) **EP 3 073 163 A1**
(43) Veröffentlichungstag der Anmeldung: **28.09.2016**
(21) Anmeldenummer: 15170181.0
(22) Anmeldetag: 02.06.2015
(51) Int. Cl.: F16K 37/00, F16K 31/04, F16K 31/50, F16K 7/12

(54) **ANTRIEB FÜR EIN MEMBRANVENTIL**

(30) Priorität: 11.03.2015 EP 15158553
(71) Anmelder: Georg Fischer Rohrleitungssysteme AG, 8201 Schaffhausen (CH)
(72) Erfinder: Stumpp, Jürgen, 79771 Klettgau (DE)
(74) Vertreter: Fenner, Seraina

(57) **Zusammenfassung**

Vorrichtung (1) zur Betätigung eines Membranventils beinhaltend ein Gehäuse (2), wobei das Gehäuse vorzugsweise aus einem Ober- (3) und Unterteil gebildet ist, einen Elektromotor (7), eine Basisplatine zur Befestigung von elektrischen Bauteilen, eine Getriebebaugruppe (6) zur Betätigung des Membranventils bzw. der Spindelmutter des Membranventils und eine Stellungsanzeige (11) zur Anzeige des Öffnungsgrades des Membranventils, wobei die Stellungsanzeige über die Getriebebaugruppe angetrieben ist.

## Beschreibung

Die Erfindung betrifft eine Vorrichtung zur Betätigung eines Membranventils beinhaltend ein Gehäuse, wobei das Gehäuse vorzugsweise aus einem Ober- und Unterteil gebildet ist, einen Elektromotor, eine Basisplatine zur Befestigung von elektrischen Bauteilen, eine Getriebebaugruppe zur Betätigung des Membranventils bzw. der Spindelmutter des Membranventils und eine Stellungsanzeige zur Anzeige des Öffnungsgrades des Membranventils.

Membranventile werden in Rohrleitungssystemen als Absperrorgan oder zur Regelung des Durchflusses von Fluiden eingesetzt. Membranventile zeichnen sich dadurch aus, dass sie gegen verschmutzte Medien eher unempfindlich sind. Unter anderem kommen Membranventile in der chemischen Prozessindustrie, Wasseraufbereitung, in Kraftwerken, für Kühl-oder Regelapplikationen, usw. zur Anwendung. Membranventile können manuell, pneumatisch oder elektrisch gesteuert bzw. angetrieben werden. Bei automatisch gesteuerten Anlagen werden elektrisch angetriebene Membranventile bevorzugt. Ein solcher Antrieb hat den Vorteil, dass alle im System damit ausgerüsteten Membranventile zentral von einem Ort aus gesteuert bzw. geregelt werden können.

Die DE 35 20 502 C2 offenbart eine Antriebsvorrichtung für ein Ventil, insbesondere ein Membranventil, das eine Spindel beinhaltet, wobei der Griff der Handkurbel als einschraubbares Schauglas ausgebildet ist, das in das Gehäuse geschraubt wird in welchem der Zapfen zur Positionsanzeige des Membranventils auf- und absteigt.

Nachteilig hierbei ist der herausragende Griff, welcher als Schauglas dient und durch seine exponierte Position schnell beschädigt werden kann sowie auch mehr Platz für den Einbau benötigt wird.

Es ist Aufgabe der Erfindung eine Vorrichtung zur Betätigung eines Membranventils vorzuschlagen bei der der Öffnungsgrad des Membranventils gut erkennbar ist und eine eindeutige Stellung der Armatur bei mehreren Umdrehungen angibt. Die Vorrichtung soll auf jedes manuelle Membranventil adaptierbar bzw. mit einem Handantrieb austauschbar sein. Durch die Austauschbarkeit soll es möglich sein ein manuell betriebenes Membranventil möglichst einfach ohne viel Aufwand und viele Kosten in ein automatisch betriebenes Membranventil umzurüsten, welches aber dennoch eine visuelle Kontrolle des Öffnungsgrads des Membranventils zulässt.

Die Aufgabe wird dadurch gelöst, dass die Stellungsanzeige über die Getriebebaugruppe angetrieben ist.

Die Vorrichtung zur Betätigung des Membranventils beinhaltet ein Gehäuse, wobei das Gehäuse vorzugsweise aus einem Ober- und Unterteil gebildet ist. Selbstverständlich kann das Gehäuse auch aus noch mehreren Teilen gebildet werden. Das Gehäuse wird vorzugsweise im Spritzgiessverfahren hergestellt. Zudem beinhaltet die Vorrichtung einen Elektromotor, welcher über die Getriebebaugruppe das Membranventil bzw. der Spindelmutter betätigt, wodurch sich die Membrane hebt und senkt. Des Weiteren weist die Vorrichtung eine Basisplatine auf, auf der die elektrischen Bauteile angeordnet sind.

Zur visuellen Überprüfung der Position der Membrane bzw. des Öffnungsgrads des Membranventils beinhaltet die Vorrichtung eine Stellungsanzeige, wobei die Stellungsanzeige ebenfalls über die Getriebebaugruppe angetrieben ist.

Damit der Öffnungsgrad des Membranventils bzw. die Position der Membrane eindeutig erkannt wird, weist die Vorrichtung einen Initiator auf. Dieser gibt den genauen Öffnungsgrad des Membranventils wieder. Zudem kann dadurch die Steuerung bei einem Stromausfall die genaue Position bzw. Stellung der Membrane erkennen bzw. bekommt durch den Initiator ein eindeutiges Signal bezüglich der Position.

Vorzugsweise ist der Initiator an der Stellungsanzeige angeordnet. Als bevorzugter Initiator hat sich ein Drehgeber erwiesen, wobei auch andere Initiatoren die die genaue Position der Membrane bzw. der Stellungsanzeige erfassen können denkbar und einsetzbar sind.

Die Getriebebaugruppe weist vorzugsweise eine obere und untere Grundplatte auf, zwischen denen die Zahnräder zur gewünschten Kraftübertragung und Drehzahlübersetzungen angeordnet sind. Vorzugsweise sind in der Getriebebaugruppe ausschliesslich Stirnräder eingesetzt, wobei die Zahnräder aus unterschiedlichen Materialien wie auch aus einheitlichen Materialien gebildet sein können.

Die Grundplatten der Getriebebaugruppen sind mittels Distanzbolzen voneinander beabstandet damit die meisten der Zahnräder dazwischen angeordnet werden können. Alternative Bauweisen einer solchen Getriebebaugruppe sind selbstverständlich möglich. Wie zuvor bereits erwähnt ist auch die Stellungsanzeige über die Getriebebaugruppe angetrieben.

Vorzugsweise ist die Vorrichtung elektrisch betrieben bzw. mittels elektischem Strom.

Die Stellungsanzeige zeigt den Öffnungsgrad des Membranventils durch eine rotative Bewegung an. Die Stellungsanzeige entspricht einer Drehanzeige in dem auf dem Anzeigebutton der Stellungsanzeige bspw. ein Anzeigesymbol dargestellt ist, das sich bei Betätigung in die entsprechenden Position ausrichtet bzw. dreht, die bspw. durch eine Skala um den Anzeigebutton am Gehäuse gebildet ist. Diese Drehbewegung wird über das Getriebe initiiert und verläuft entsprechend der Betätigung der Spindelmutter, nur mit einer anderen bzw. zusätzlichen Übersetzung.

Da vorzugsweise der Initiator an der Stellungsanzeige angeordnet ist, dreht sich dieser entsprechend mit und gibt die eindeutige Position bzw. Öffnungsgrad des Membranventils wieder.

Die Stellungsanzeige beinhaltet als vorteilhafte Ausgestaltung eine Stellungsanzeigewelle und einen Anzeigebutton. Die Stellungsanzeigewelle verläuft vertikal in der Vorrichtung, wobei der Anzeigebutton am oberen Ende der Stellungsanzeigewelle angeordnet ist.

Die Stellungsanzeige bzw. die Stellungsanzeigewelle verläuft koaxial zur Spindelmutter des Membranventils. Vorzugsweise verläuft die Stellungsanzeige koaxial mit dem direkt mit der Spindelmutter formschlüssig verbundenen Zahnrad der Getriebebaugruppe.

Als bevorzugte Ausgestaltung hat sich gezeigt, dass das Gehäuse einen Klarsichtbereich aufweist, der oberhalb des Anzeigebuttons angeordnet ist und dadurch die Sicht auf den Anzeigebutton und somit auf das Anzeigesymbol, welches die Stellung des Membranventils anzeigt, ermöglicht. Durch diese vorteilhafte Ausführungsform kann die komplette Stellungsanzeige im Gehäuse der Vorrichtung angeordnet werden, wodurch zusätzliche Dichtstellen vermieden werden können und eine Verschmutzung im Inneren der Vorrichtung auf ein Minimum reduziert werden kann. Selbstverständlich bestehen aber auch andere Möglichkeiten der Anordnung eines Klarsichtbereichs am Gehäuse.

Damit eine eindeutige Anzeige des Öffnungsgrads des Membranventils erfolgt, weist das Getriebe eine derartige Übersetzung auf, dass die mehreren Umdrehungen der Spindelmutter, die zum kompletten Öffnen und/oder Schliessen des Membranventils benötigt sind, in maximal eine Umdrehung der Stellungsanzeige, zur Anzeige des Öffnungsgrads des Membranventils, übersetzt sind. Mittels des Initiators der vorzugsweise an der Stellungsanzeige angeordnet ist, kann eine Steuerung für die erfindungsgemässe Vorrichtung die Stellung des Membranventils erkennen und auch nach Stromausfall bleibt die Anzeige und Stellungsrückmeldung eindeutig.

Vorzugsweise wird eine solche Übersetzung dadurch gebildet, indem mindestens eine weitere bzw. eine zusätzliche Getriebestufe in der Getriebebaugruppe angeordnet ist bzw. an die Getriebebaugruppe anschliesst, die dem Antrieb der Stellungsanzeige dient. Das heisst, dass bspw. das Zahnrad, welches mit der Spindelmutter formschlüssig verbunden ist mit einem weiteren Zahnrad starr verbunden ist, welches koaxial dazu angeordnet ist und demzufolge mit derselben Drehzahl läuft, jedoch einen geringeren Durchmesser hat und dieses wiederum mit einem weiteren Zahnrad kämmt um die Drehzahl zu reduzieren, welches dann über ein abtreibendes, koaxial dazu angeordnetes Zahnrad, das an der Stellungsanzeige angeordnete Zahnrad anzutreiben.

Die weiteren bzw. zusätzlichen Getriebestufen können in der Getriebebaugruppe bzw. zwischen der oberen- und unteren Grundplatte angeordnet sein, wie auch ausserhalb. Eine vorteilhafte Ausgestaltung hat sich gezeigt, wenn zusätzliche Getriebestufen auf der oberen Grundplatte der Getriebebaugruppe angeordnet sind. Eine solche Ausgestaltung macht die Vorrichtung variabel einsetzbar und die Übersetzung kann durch Austausch der Zahnräder einfach geändert werden.

Durch eine Übersetzung bzw. die Verbindung der Spindelmutter des Membranventils mit der Getriebebaugruppe wird die Hubbewegung der Membrane mittels der Spindelmutter in eine rotative Bewegung umgeformt und die Mehrfachumdrehungen der Spindelmutter für den benötigten Hub der Membrane in maximal eine Umdrehung auf die Stellungsanzeige übersetzt, wodurch der Öffnungsgrad des Membranventils angezeigt wird.

Als Vorteilhaft hat sich gezeigt, dass die Vorrichtung ein Zwischenelement aufweist, das zur Befestigung der Vorrichtung am Membranventil dient. Dieses Zwischenelement ist derart ausgebildet, dass die Vorrichtung auf bereits bestehende, mit Handantrieb ausgestattete Membranventile adaptiert werden kann bzw. die Vorrichtung anstelle des Handantriebs angebracht werden kann.

Vorzugsweise weist die Vorrichtung einen Adapter auf, der die Getriebebaugruppe mit dem Membranventil bzw. der Spindelmutter koppelt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen Längsschnitt durch eine erfindungsgemässe Vorrichtung, die bereits auf einem Membranventil befestigt ist,
- Fig. 2: eine dreidimensionale Schnittansicht einer erfindungsgemässen Vorrichtung und
- Fig. 3: einen dreidimensionalen Ausschnitt der erfindungsgemässen Vorrichtung im Bereich des Initiators.

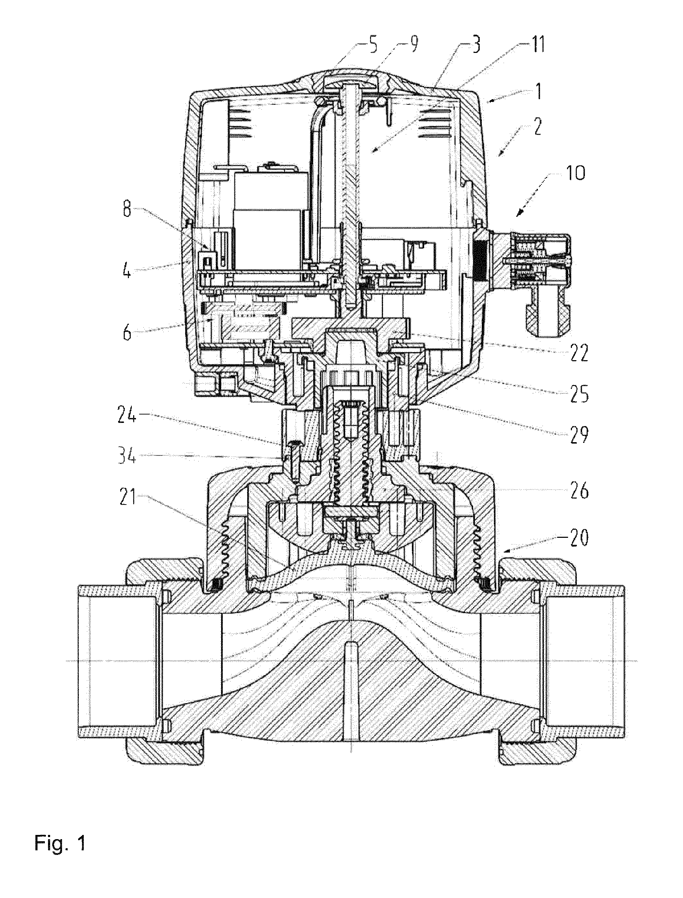

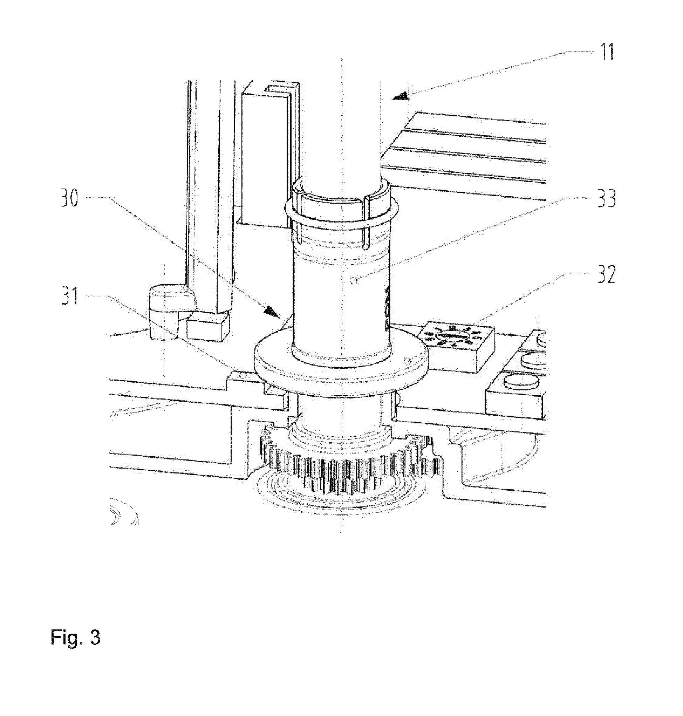

Fig. 1 zeigt die erfindungsgemässe Vorrichtung im Längsschnitt, wobei die Vorrichtung 1 bereits am Membranventil 20 befestigt ist. Die erfindungsgemässe Vorrichtung 1 weist ein Gehäuse 2 auf, wobei das Gehäuse 2 vorzugsweise aus einem Unterteil 4 und einem Oberteil 3 besteht. Im Gehäuse 2 angeordnet ist ein Elektromotor 7, wobei dieser die Getriebebaugruppe 6 antreibt und diese wiederum das Membranventil 20 bzw. deren Spindelmutter 26, welche für den Hub der Membrane 21 verantwortlich ist. Zur Erkennung der Position der Membrane 21 bzw. des Öffnungsgrads des Membranventils 20, weist die Vorrichtung 1 eine Stellungsanzeige 11 auf. Die Stellungsanzeige 11 wird ebenfalls durch die Getriebebaugruppe 6 angetrieben. Die Umdrehungen, die zum Öffnen und Schliessen des Membranventils 20 benötigt werden, werden mittels Getriebebaugruppe 6 und wenn nötig weiteren Getriebestufen derart übersetzt, dass während max. einer Umdrehung der Stellungsanzeige 11 jeder Öffnungsgrad des Membranventils 20 angezeigt werden kann. Um eine optimale Stellung-bzw. Positionserkennung zu gewährleisten, weist die Vorrichtung 1 vorzugsweise einen Initiator 30 auf, wobei der Initiator 30 vorzugsweise an der Stellungsanzeige 11 angeordnet ist, mittels dem der genaue Öffnungsgrad des Membranventils 20 erfasst werden kann. Als Beispiel eins bevorzugten Initiators 30 ist in Fig. 3 ein Drehgeber abgebildet der vorzugsweise magnetisch funktioniert. Auch andere Initiatoren oder Drehgerber die aus dem Stand der Technik bekannt sind, sind einsetzbar. Des Weiteren ist eine Basisplatine 8 mit den darauf befestigten elektrischen Bauteilen in der Vorrichtung 1 angeordnet. Die Energiezuführung erfolgt über einen Anschluss 10.

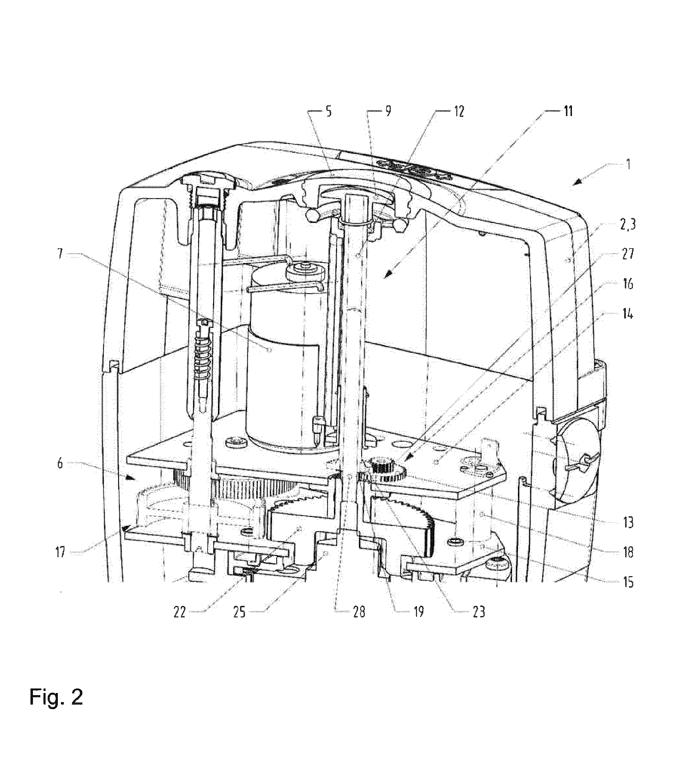

Fig. 2 zeigt unteranderem einen beispielhaften Aufbau einer Getriebebaugruppe 6 in der erfindungsgemässen Vorrichtung 1. Selbstverständlich sind auch andere Anordnungen und Aufteilungen von Getriebestufen in einer Getriebebaugruppe möglich. Der Elektromotor 7 ist vorzugsweise auf der oberen Grundplatte 14 der Getriebebaugruppe 6 angeordnet. An der Abgangswelle (nicht ersichtlich) des Elektromotors 7 ist ein Zahnrad (nicht ersichtlich) angeordnet, das mit einem Zahnrad 17 der Getriebebaugruppe 6 kämmt. Die Getriebebaugruppe 6 weist derart viele Zahnräder 17 und Getriebestufen auf, dass das benötigte Drehmoment zur Betätigung des Membranventils 20 bzw. der Spindelmutter 26 erreicht werden kann. Weshalb auch der Aufbau einer solchen Getriebebaugruppe 6 mit den darin angeordneten Zahnrädern 17 individuell auszulegen ist, abhängig vom antreibenden Elektromotor 6 und dem zur Verfügung stehenden Platz. Durch die dreidimensionale Schnittdarstellung in Fig. 2 ist die in der Vorrichtung 1 angeordnete Stellungsanzeige 11, die über die Getriebebaugruppe 6 angetrieben wird, gut ersichtlich.

Die Getriebebaugruppe 6 weist unterschiedliche Zahnräder 17 auf, die in mehreren Getriebestufen angeordnet sind, wobei das Zahnrad 22 mittels eines Adapters 25 formschlüssig mit der Spindelmutter 26 verbunden ist. Das angetriebene Zahnrad 22 befindet sich somit in derselben Achse wie die Spindelmutter 26 und vorzugsweise auch der Stellungsanzeige 11. Um den Öffnungsgrad des Membranventils 20 mit der Stellungsanzeige 11 aufzuzeigen, ist mit dem Zahnrad 22 ein weiteres Zahnrad 19 koaxial dazu angeordnet und sind fest miteinander verbunden, wobei das Zahnrad 19 somit dieselbe Drehzahl und vorzugsweise einen wesentlich kleineren Durchmesser aufweist, da das Ziel darin besteht, die mehreren Umdrehungen, die für das Öffnen und Schliessen des Ventils 20 benötigt werden, während maximal einer einzigen Umdrehung der Stellungsanzeige 11 aufzuzeigen. Somit ist das Zahnrad 19, welches die Drehzahl der Spindelmutter 26 aufweist, mit dem mit der Spindelmutter 26 verbundenen Zahnrad 22 und der Spindelmutter 26 selbst, koaxial angeordnet. Vorzugsweise ist das Zahnrad 19 oberhalb der oberen Grundplatte 14 angeordnet und treibt eine weitere Getriebestufe 16 an, wobei die weitere Getriebestufe 16 zur Drehzahlreduzierung und somit der Stellungsanzeige 11 dient. Somit weist die weitere Getriebestufe16 ein Zahnrad 13 auf, welches durch das Zahnrad 19 angetrieben wird, welches einen grösseren Durchmesser aufweist als das Zahnrad 19, wodurch bereits hier die Drehzahl reduziert wird. Das auf derselben Getriebestufe 16 angeordnete Zahnrad 27, das koaxial und fest mit dem Zahnrad 13 verbunden ist, übernimmt demzufolge dessen Drehzahl und treibt das Zahnrad 23 an, welches fest mit der Stellungsanzeigewelle 12 verbunden ist. Da das Zahnrad 23 vorzugsweise einen grösseren Durchmesser als das antreibende Zahnrad 27 aufweist, wird hier wiederum die Drehzahl verringert. Die Stellungsanzeigewelle 12 der Stellungsanzeige 11 ist mit dem fest daran angeordneten Zahnrad 23 auf der Achse 28 drehbar gelagert. Am oberen Ende der Stellungsanzeige 11 ist der Anzeigebutton 9 angeordnet, der sich entsprechend mit der Stellungsanzeigewelle 12 mitdreht. Vorzugsweise befindet sich an der Stellungsanzeige 11 ein Initiator 30, ersichtlich in Fig. 3. Dieser erfasst die genaue Position bzw. den Öffnungsgrad des Membranventils 20 und übermittelt die erfasste Position an eine Steuerung, welche mit dem Motor 7 kommuniziert. Der in Fig. 3 abgebildete magnetische Drehgeber ist ein möglicher Initiator 30 der zu diesem Zweck eingesetzt werden kann. Vorzugsweise ist an der Stellungsanzeige 11 bzw. an der Stellungsanzeigewelle 12 ein Magnethalter 33 angeordnet, an dem ein Magnetring 32 des Initiators 30 bzw. in dieser Ausführungsform eines magnetischen Drehgebers angeordnet ist. Zur Ermittlung der Position dient der Positionsaufnehmer 31 der mit Hilfe des Magnetrings 32 die Position der Membrane erkennt. Solche Initiatoren sind bestens aus dem Stand der Technik bekannt.

Als bevorzugter Aufbau der Getriebebaugruppe 6 weist sie eine obere und untere Grundplatte 14, 15 auf, die mittels Distanzbolzen 18 voneinander beanstandet sind und dazwischen die Zahnräder 17, 22 zum Antreiben des Spindelmutter 26 angeordnet und gelagert sind. Wobei auch wie zuvor erwähnt, weitere Getriebestufen zur Übersetzung auf die Stellungsanzeige auch zwischen den Grundplatten angeordnet sein können.

Der Klarsichtbereich 5 im Gehäuse 2 ermöglicht den Blick auf den Anzeigebutton 9 und somit die Möglichkeit, dass die komplette Stellungsanzeige 11 im abgedichteten Gehäuse 2 angeordnet ist.

Um die Vorrichtung 1 auf einem Membranventil 20 zu befestigen, weist sie ein Zwischenelement 24 vorzugsweise aus Kunststoff auf, was in Fig. 1 ersichtlich ist. Das Zwischenelement 24 dient als eine Art Übergangsstück und ermöglicht das Montieren der Vorrichtung 1 mit der daran angeordneten Aufnahme 29 am Membranventil 20. Das Zwischenelement 24 ist formschlüssig mit der erfindungsgemässen Vorrichtung 1 und dem Membranventil 20 verbunden um die Drehmomente zu übertragen. Die Befestigungsmittel 34 zur Befestigung des Zwischenelements 24 am Membranventil 20 sind im montierten Zustand nicht zugänglich und dadurch gegen äussere Einflüsse geschützt.

Um die Kraftübertragung der Vorrichtung 1 auf die Spindelmutter 26 zu ermöglichen, ist ein Adapter 25 mit der Spindelmutter 26 und dem Zahnrad 22 formschlüssig verbunden.

### Bezugszeichenliste

- 1: Vorrichtung
- 2: Gehäuse
- 3: Oberteil Gehäuse
- 4: Unterteil Gehäuse
- 5: Klarsichtbereich
- 6: Getriebebaugruppe
- 7: Elektromotor
- 8: Basisplatine
- 9: Anzeigebutton
- 10: Anschluss zum Anschliessen der Energieversorgung
- 11: Stellungsanzeige
- 12: Stellungsanzeigewelle
- 13: Angetriebenes Zahnrad
- 14: Obere Grundplatte
- 15: Untere Grundplatte
- 16: Weitere Getriebestufe
- 17: Zahnräder
- 18: Distanzbolzen
- 19: Zahnrad, fest mit Zahnrad 22 verbunden
- 20: Membranventil
- 21: Membrane
- 22: Zahnrad formschlüssig über Adapter mit Spindelmutter verbunden
- 23: Zahnrad an Stellungsanzeigewelle
- 24: Zwischenelement
- 25: Adapter
- 26: Spindelmutter Membranventil
- 27: Abtreibendes Zahnrad / antreibendes Zahnrad in Bezug auf Zahnrad 23
- 28: Feste Achse
- 29: Aufnahme
- 30: Initiator
- 31: Positionsabnehmer
- 32: Magnetring
- 33: Magnethalter
- 34: Befestigungsmittel

## Patentansprüche

1. Vorrichtung (1) zur Betätigung eines Membranventils (20) beinhaltend ein Gehäuse (2), wobei das Gehäuse (2) vorzugsweise aus einem Ober- (3) und Unterteil (4) gebildet ist, einen Elektromotor (7), eine Basisplatine (8) zur Befestigung von elektrischen Bauteilen, eine Getriebebaugruppe (6) zur Betätigung des Membranventils (20) bzw. der Spindelmutter (26) des Membranventils (20) und eine Stellungsanzeige zur Anzeige des Öffnungsgrades des Membranventils (20), **dadurch gekennzeichnet, dass** die Stellungsanzeige (11) über die Getriebebaugruppe (6) angetrieben ist.

2. Vorrichtung (1) nach Anspruch 1, **dadurch gekennzeichnet, dass** die Vorrichtung (1) mittels elektrischem Strom betrieben ist bzw. elektrisch ist.

3. Vorrichtung nach einem der Ansprüche 1 oder 2, **dadurch gekennzeichnet, dass** die Stellungsanzeige (11) durch eine rotative Bewegung bzw. Drehbewegung den Öffnungsgrad des Membranventils anzeigt.

4. Vorrichtung (1) nach einem der Ansprüche 1 bis 3, **dadurch gekennzeichnet, dass** die Vorrichtung (1) einen Initiator (30) aufweist.

5. Vorrichtung (1) nach Anspruch 4, **dadurch gekennzeichnet, dass** der Initiator (30) an der Stellungsanzeige (11) angeordnet ist.

6. Vorrichtung (1) nach einem der Ansprüche 4 oder 5, **dadurch gekennzeichnet, dass** der Initiator (30) als Drehgeber ausgebildet ist.

7. Vorrichtung (1) nach einem der Ansprüche 1 bis 6, **dadurch gekennzeichnet, dass** mehrere, zum kompletten Öffnen und/oder Schliessen des Membranventils (20) benötigte Umdrehungen der Spindelmutter (26) in maximal einer Umdrehung der Stellungsanzeige (11) zur Anzeige des Öffnungsgrads des Membranventils (20), übersetzt sind.

8. Vorrichtung (1) nach einem der Ansprüche 1 bis 7, **dadurch gekennzeichnet, dass** die Getriebebaugruppe (6) bzw. anschliessend an die Getriebebaugruppe (6) mindestens eine weitere bzw. zusätzliche Getriebestufe (16) zum Antreiben der Stellungsanzeige und entsprechender Übersetzung der Drehzahl (11) aufweist.

9. Vorrichtung (1) nach einem der Ansprüche 1 bis 8, **dadurch gekennzeichnet, dass** Stellungsanzeige (11) eine Stellungsanzeigewelle (12) und einen Anzeigebutton (9) aufweist.

10. Vorrichtung (1) nach einem der Ansprüche 1 bis 9, **dadurch gekennzeichnet, dass** die Stellungsanzeige (11) bzw. die Stellunganzeigewelle (12) koaxial mit dem Zahnrad (22) verbunden ist, wobei das Zahnrad (22) formschlüssig und koaxial mit der Spindelmutter (26) des Membranventils verbunden ist, vorzugsweise mittels eines Adapters (25).

11. Vorrichtung (1) nach einem der Ansprüche 9 oder 10, **dadurch gekennzeichnet, dass** an der Stellungsanzeigewelle (12) ein Zahnrad (23) angeordnet ist.

12. Vorrichtung (1) nach einem der Ansprüche 1 bis 11, **dadurch gekennzeichnet, dass**, die Stellungsanzeige (11) komplett im Gehäuse (2) angeordnet ist.

13. Vorrichtung (1) nach einem der Ansprüche 1 bis 12, **dadurch gekennzeichnet, dass** das Gehäuse (2) einen Klarsichtbereich (5) aufweist.

14. Vorrichtung (1) nach einem der Ansprüche 1 bis 13, **dadurch gekennzeichnet, dass** die Vorrichtung (1) ein Zwischenelement (24) aufweist, wobei das Zwischenelement (24) zur Befestigung der Vorrichtung (1) am Membranventil (20) dient.

15. Vorrichtung (1) nach einem der Ansprüche 1 bis 14, **dadurch gekennzeichnet, dass** die Vorrichtung (1) einen Adapter (25) aufweist, wobei der Adapter (25) die Getriebebaugruppe (6) mit dem Membranventil (20) bzw. das Zahnrad (22) mit der Spindelmutter (26) des Membranventils koppelt.
